# EUROPÄISCHE PATENTANMELDUNG

(11) **EP 2 586 549 A2**
(43) Veröffentlichungstag der Anmeldung: **01.05.2013**
(21) Anmeldenummer: 12183526.8
(22) Anmeldetag: 07.09.2012
(51) Int. Cl.: B23B 5/40

(54) **Verfahren und Vorrichtung zur Bearbeitung eines Kunststoffteils mit einer Drehmaschinenvorrichtung**

(30) Priorität: 20.09.2011 DE 102011053772
(71) Anmelder: Opto Tech Optikmaschinen GmbH, 35435 Wettenberg (DE)
(72) Erfinder: Mandler, Dipl. Ing. Roland, 35452 Heuchelheim (DE)
(74) Vertreter: Buchhold, Jürgen

(57) **Zusammenfassung**

Die Erfindung betrifft ein Verfahren zur Bearbeitung eines Kunststoffteils mit einer Drehmaschinenvorrichtung, umfassend die folgenden Schritte:
- Rotieren des Kunststoffteils;
- In Eingriff bringen einer Werkzeugschneide mit dem Kunststoffteil;
- Erzeugen eines Gasstroms und eines Flüssigkeitsstroms;
- Umströmen eines von dem Kunststoffteil abgehobenen Spans mit dem Gasstrom und anschließendes Umströmen des Spans mit dem Flüssigkeitsstrom.

Außerdem betrifft die Erfindung eine Drehmaschinenvorrichtung zur Durchführung des Verfahrens, mit einer drehbaren Werkstückaufnahme, einem Werkzeug mit einer Werkzeugschneide und einer Spanentfernungsvorrichtung, wobei die Spanentfernungsvorrichtung einen Gasströmungserzeuger mit einer in Richtung des Werkzeugs ausgerichteten Gasdüse und einen Flüssigkeitsströmungserzeuger mit einem unterhalb der Werkzeugschneide angeordneten Flüssigkeitskanal aufweist.

## Beschreibung

Die Erfindung betrifft ein Verfahren zur Bearbeitung eines Kunststoffteils mit einer Drehmaschinenvorrichtung gemäß Anspruch 1, sowie eine Drehmaschinenvorrichtung zur Durchführung des Verfahrens gemäß dem Oberbegriff von Anspruch 12.

Aus dem Stand der Technik sind verschiedene Drehmaschinen zur drehenden Bearbeitung von Bauteilen/Werkstücken bekannt. Durch in Eingriff bringen einer Werkzeugschneide mit einem sich drehenden Werkstück wird ein Span von der Oberfläche des Werkstücks abgehoben. Neben der Bearbeitung von Werkstücken aus Metall hat auch die drehende Bearbeitung von Kunststoffteilen eine erhebliche Bedeutung, insbesondere bei der Fertigung von optischen Linsen.

Dabei nimmt insbesondere der Marktanteil von aus Kunststoff gefertigten Brillengläsern aus Rohlingen massiv zu. Um unterschiedliche Eigenschaften der Brillengläser zu optimieren, wurden in den letzten Jahren neue Kunststoffe für optische Anwendungen entwickelt. Einen besonderen Schwerpunkt bilden Materialien, die besonders schlagfest (impactresistent) sind. Durch eine hohe Schlagfestigkeit können Augen gut geschützt werden, so zum Beispiel vor Steinschläge beim Motorradfahren, bei Tätigkeiten in einer Werkstatt oder sonstigen Tätigkeiten, bei denen Personen mit gefährlichen Flugpartikeln konfrontiert werden.

Besonders weit verbreitet sind dabei Brillengläser aus Polykarbonat. Dieses Material hat aufgrund seiner hohen Zähigkeit eine extrem gute Schlagfestigkeit. Derart zähe Materialien führen bei der drehenden Bearbeitung zu einem nicht brechenden und somit sehr langen Fließspan. Gerade dies ist bei der Bearbeitung von hochpräzisen optischen Kunststoffteilen ein großer Vorteil, da keine Spanbrüche im unmittelbaren Bereich der Schneidzone auftreten, welche zu Unebenheiten auf der bearbeiteten Oberfläche führen.

Besonders bevorzugt wird daher eine Bearbeitung der Oberfläche, bei der nur ein einziger Monofließspan pro in Eingriff bringen der Werkzeugschneide mit dem Kunststoffteil, bzw. mit einem Rohling, entsteht. Dies gilt vor allem für den finalen Materialabhub mit einem Diamant-Drehwerkzeug, bei dem eine optische Linsenoberfläche mit möglichst hoher Güte hergestellt wird. Jede Unterbrechung des Spanes würde zu Schädigungen auf der Linsenoberfläche führen, die mit einem sich anschließenden Polieren nicht mehr zu beseitigen sind.

Problematisch bei einem Materialabhub mit Monofließspan ist, dass der sehr lange Fließspan ein chaotisches Bewegungsverhalten aufweist. Er kann hierbei in drehende Teile der Drehmaschine geraten, z.B. in eine drehende Werkstückaufnahme, wodurch er bis zu einem Abreißen zugbelastet werden kann. Diese Zugbelastungen können wiederum zu einem unsauberen Materialabhub in der Schneidzone führen, sodass die bearbeitete Oberfläche nicht nachbearbeitbare Unebenheiten aufweist.

Der sehr lange Fließspan mit einem Querschnitt von ca. 0,1 x 0,03 mm wickelt sich zudem um die drehende Werkstückaufnahme, von welcher er anschließend händisch entfernt werden muss. Maschinenstandzeiten und Lohnkosten sind die Folge. Andernfalls wird ein automatischer Ladeprozess von Kunststoffteilen in die Werkstückaufnahme unterbrochen, da ein Span im Bereich einer Spannzange der Werkstückaufnahme regelmäßig zu Einlegefehlern führt.

Daher versucht der Stand der Technik, den Span gezielt von der Werkzeugschneide wegzuführen. Dafür werden heute vorwiegend Spritzwasserdüsen eingesetzt, die den Span mit einem relativ hohen Wasserdruck so ablenken sollen, dass er sich nicht mit der Werkstückaufnahme oder der Werkzeugspindel verwickelt. Es sind auch Vorrichtungen bekannt, bei denen der Span über einen Vakuumsauger abgeführt wird.

Problematisch hierbei ist, dass ein auf den Span gerichteter Wasserstrahl zu Schwingungen und Vibrationen des Spans führt, die den Spanabhub in der Schnittstelle negativ beeinflussen. Vor allem Polykarbonat ist besonders empfindlich gegenüber Schwingungen des Spans. Insbesondere tänzelt der Span in den Wasserstrahl hinein und aus diesem hinaus. Dies führt letztlich zu einer sprunghaften Zugbelastung des Spans, was sich in einer unebenen bearbeiteten Oberfläche äußert.

Außerdem vibrieren die Teile, auf welche der Wasserstrahl auftrifft. Insbesondere das Werkzeug mit der Werkzeugschneide und das Werkstück schwingen. Dies führt zu Nanodefekten auf der bearbeiteten Oberfläche. Auch diese Unebenheiten sind durch sich anschließende Polierverfahren kaum noch zu beseitigen. Weiterhin hat der Flüssigkeitsstrahl der bekannten Vorrichtungen einen relativ kleinen Querschnitt, sodass sich ein Fließspan aus dessen Bereich herausbewegen kann und schließlich doch in sich drehende Teile gerät.

Die Variante des Vakuumabsaugens entfernt zwar den Fließspan relativ sicher, problematisch ist jedoch eine fehlende Kühlung in der Schneidzone während des Schneidvorganges. Es kommt in der Folge zu unerwünschten Temperaturerhöhungen, die negative Auswirkungen auf die Schneidqualität des Werkzeugs, sowie die Materialbeschaffenheit des bearbeiteten Kunststoffteils hat. Zum Beispiel kann es am Kunststoffteil zu Brandspuren und plastischen Verformungen kommen.

Aufgabe der Erfindung ist es deshalb, die Probleme des Standes der Technik zu beseitigen und ein Verfahren zur Bearbeitung eines Kunststoffteils mit einer Drehmaschinenvorrichtung sowie eine Drehmaschinenvorrichtung zur Durchführung des Verfahrens zu entwickeln, mit dem eine Bearbeitung eines Kunststoffteils mit hoher Oberflächengüte möglich ist. Insbesondere zu lösen sind dabei der Spanabtransport und die Kühlung der Schneidzone. Die Lösung soll zusätzlich sehr zuverlässig, einfach umsetzbar und kostengünstig sein.

Hauptmerkmale der Erfindung sind in den Ansprüchen 1 und 12 angegeben. Ausgestaltungen sind Gegenstand der Ansprüche 2 bis 11 und 13 bis 16.

Die Erfindung betrifft ein Verfahren zur Bearbeitung eines Kunststoffteils mit einer Drehmaschinenvorrichtung, umfassend die folgenden Schritte:
- Rotieren des Kunststoffteils;
- In Eingriff bringen einer Werkzeugschneide mit dem Kunststoffteil;
- Erzeugen eines Gasstroms und eines Flüssigkeitsstroms;
- Umströmen eines von dem Kunststoffteil abgehobenen Spans mit dem Gasstrom und anschließendes Umströmen des Spans mit dem Flüssigkeitsstrom.

Das sich anschließende Umströmen des Spans mit dem Flüssigkeitsstrom ist dabei so zu verstehen, dass ein einziger Span nicht zwingend nur vom Gasstrom oder nur vom Flüssigkeitsstrom umströmt wird. Vielmehr kann ein längerer Span, insbesondere ein Fließspan oder ein Monofließspan, auch gleichzeitig aber räumlich getrennt vom Gasstrom und dem Flüssigkeitsstrom umströmt werden. Dabei kann ein Teilabschnitt des Spans vom Gasstrom und ein bereits zu einem früheren Zeitpunkt entstandener Teilabschnitt des Spans vom Flüssigkeitsstrom umströmt werden.

Besonders vorteilhaft ist, dass ein Gasstrom problemlos einen verhältnismäßig breiten Strömungskegel aufweisen kann, um den Span sicher zu erfassen. Innerhalb des Kegels ist der Span geneigt sich strömungsgünstig auszurichten. Er kann sich insbesondere parallel zum Gasstrom ausrichten und ein Hinaustänzeln aus dem Strömungskegel ist verhinderbar. Der Span erfährt so eine relativ konstante Zugkraft durch den Gasstrom. Insbesondere sind plötzliche Sprünge in der Zugkraft verhinderbar. Weiterhin vibrieren von dem Gasstrom umströmte Teile kaum. Unebenheiten auf der bearbeiteten Oberfläche, wie z.B. Nanodefekte, sind so verhinderbar.

Der Gasstrom sollte dabei wenigstens den Bereich der Werkzeugschneide umströmen, um den Span zu einem frühen Entstehungszeitpunkt kontrolliert abzuführen. Hierdurch kann auch eine Kühlung in der Scheidzone erreicht werden. Diese Kühlung mit Gas ist bei der drehenden Bearbeitung von Kunststoffteilen hinreichend, und wirkt sich ebenfalls positiv auf den Bearbeitungsprozess, insbesondere auf die Qualität der bearbeiteten Oberfläche, aus.

Die anschließende Umspülung des Spans mit dem Flüssigkeitsstrom verbessert den Spanabtransport zusätzlich. Durch einen Strom statt eines Strahls ist eine homogene Strömung einer größeren Menge Flüssigkeit bereitstellbar. In den Flüssigkeitsstrom eingetaucht wird der Span durch Umspülung abtransportiert. Er tänzelt dabei weniger aus dem Flüssigkeitsstrom heraus als es bei einem Flüssigkeitsstrahl der Fall wäre. Es ergibt sich durch die Umspülung eine homogene Zugkraft auf den Span. Dabei kann mit der Zugkraft des Flüssigkeitsstroms verhindert werden, dass der Span den Gasstrom, bzw. dessen Strömungskegel, verlässt. Der Span wird so besonders gleichmäßig von der Schneidzone weggeführt. Ein derartiger Flüssigkeitsstrom führt zudem nicht zu Vibrationen des Werkzeugs, Werkstücks oder sonstigen Bauteilen. Insgesamt ist so eine sehr hohe Oberflächenqualität mit hoher Prozesszuverlässigkeit erzielbar.

Der Flüssigkeitsstrom wird bevorzugt auf dem Boden des Arbeitsraumes erzeugt und sollte sich stetig und mit großem Kühlwasservolumen in Richtung eines Spanauslasses bewegen. Bei einer geschlossenen Drehmaschinenvorrichtung sollten die Späne aus dem Bereich des Spritzschutzes herausbewegt werden. Von hier können sie bequem und im laufenden Fertigungsbetrieb entsorgt werden. Besonders bevorzugt verläuft der Flüssigkeitsstrom wenigstens unterhalb der Werkzeugschneide in einem Winkel von 90 +-5 Grad zu einer Drehachse des Kunststoffteils bzw. einer Drehachse der Drehmaschinenvorrichtung. Dies ist beispielsweise durch eine schräge Rampe unterhalb der Drehachse realisierbar. Letztere sollte dabei horizontal ausgerichtet sein. Die Rampe begrenzt dann den Arbeitsraum unterhalb der Drehachse. Sie kann dabei von einem Maschinenbett ausgebildet sein, oder aber sie ist ein separates Bauteil. Durch das Gefälle können Fließgeschwindigkeit und Flüssigkeitssäule des Flüssigkeitsstroms über der Rampe eingestellt werden. Insbesondere sollte hier die Strömungsgeschwindigkeit größer sein als die Spanentstehungsgeschwindigkeit, d.h. größer als die Umdrehungsgeschwindigkeit des Kunststoffteils multipliziert mit dem Produkt aus dem Abstand der Werkzeugschneide von der Drehachse und zwei Pi. Als einsetzbare Flüssigkeiten kommen unter anderem einfaches Wasser oder aber Kühl- oder Schmiermittel in Frage.

Zusätzlich kann vorgesehen sein, dass das Werkstück von unten nach oben an der Werkzeugschneide vorbeigeführt wird. Das heißt, dass die Werkzeugschneide auf der Seite des Werkstücks mit diesem in Eingriff gebracht werden sollte, auf der das Werkstück eine Aufwärtsbewegung durchführt. Der entstehende Span hat so unmittelbar nach der Schneidzone bereits eine arithmetisch gemittelte Bewegungsausrichtung nach unten. Unterstützt durch den Gasstrom wird ein Aufsteigen und ein über einen toten Punkt Kippen des Spans verhindert. Stattdessen wird der Span gleich nach unten aus dem Bereich der sich drehenden Teile heraus geführt. Die Wahrscheinlichkeit, dass der Span in drehende Teile gerät und sich um diese wickelt, wird so minimiert.

Für die Umsetzung des Verfahrens sind nur kleine Einweisungen oder aber eine vorgegebene und nicht justierbare Vorrichtung notwendig. Strömungserzeuger für den Gas- und Flüssigkeitsstrom sind zudem im Verhältnis zur restlichen Drehmaschinenvorrichtung relativ preiswert.

Eine Ausgestaltung der Erfindung sieht weiteren folgenden Schritt vor:
- Blasen des Spans in die Richtung des Flüssigkeitsstroms mittels des Gasstroms.

Die Strömungsrichtung des Gasstroms sollte hierfür nach unten und bevorzugt in Richtung des Flüssigkeitsstroms ausgerichtet sein. Auf diese Weise kann der Span möglichst schnell in den Flüssigkeitsstrom geführt werden. Ein nur relativ kurzer Teilabschnitt des Spans befindet sich so außerhalb des Flüssigkeitsstroms. Hat der Flüssigkeitsstrom den Span erst einmal erfasst, ist das Risiko einer unkontrollierten und chaotischen Bewegung des Spans weitestgehend beseitigt.

Besonders bevorzugt umfasst das Verfahren den Schritt:
- Blasen des Spans in den Flüssigkeitsstrom mittels des Gasstroms.

Der Span sollte zwischen dem Gasstrom und dem Flüssigkeitsstrom zu keinem Zeitpunkt einen Raum durchqueren, der außerhalb des Gasstroms liegt. Der Gasstrom ist hierfür so auszurichten, dass er auf den Flüssigkeitsstrom auftrifft. Zudem sollte der Span auch zwischen der Schneidzone und dem Gasstrom keinen Raum durchqueren, der außerhalb des Gasstroms liegt. Der Span hat so nahezu keine Möglichkeit eine unkontrollierte Bewegung durchzuführen, da er stets von einem der Ströme umgeben und geführt ist. Ein sehr gleichmäßiger Zug auf den Span ist so realisierbar. Hiervon profitiert die Qualität der bearbeiteten Oberfläche erheblich.

Um den Span sicher und möglichst nah an der Schneidzone unter Kontrolle zu bringen, sieht eine Variante des Verfahrens ein Durchleiten des Flüssigkeitsstroms unter der Werkzeugschneide vor. Je näher der Flüssigkeitsstrom an der Werkzeugschneide vorbeigeführt wird, desto weniger stark und groß muss der Gasstrom sein, um den Span sicher in den Flüssigkeitsstrom zu führen. Dadurch wird wenig Energie für die Gasstromerzeugung verbraucht. Zudem kommt es wegen einer möglichen geringeren Strömungsgeschwindigkeit zu geringeren Gasverwirbelungen, wenn der Gasstrom auf das Werkzeug, Werkstück oder ähnliches Auftrifft, sodass die Gasströmung möglichst laminar bleibt. Bauteile im Bereich des Gasstroms werden nur mit geringen Umströmungskräften belastet und Schwingungen der Bauteile werden verhindert. Die Güte der bearbeiteten Oberfläche ist besonders hoch. Zudem verursacht der Gasstrom kaum Geräusche.

Idealerweise sollte der Flüssigkeitsstrom gleichmäßig sein. Das bedeutet, dass der Flüssigkeitsstrom möglichst stetig und/oder kontinuierlich sein sollte. Dies gilt insbesondere für den Bereich, in dem der Span umströmt wird. Eine hohe Gleichmäßigkeit des Flüssigkeitsstroms zumindest im Anfangsbereich, in den der Span erstmals eintaucht, führt zu einem möglichst gleichmäßigen Zug auf den Span. Dies verhindert Defekte auf der bearbeiteten Oberfläche.

Aus den gleichen Gründen sollte der erzeugte Gasstrom laminar sein. Auch hierdurch kann der Span möglichst gleichmäßig mit einer Zugkraft beaufschlagt werden und die Oberflächenqualität ist hoch. Die Laminarität sollte wenigstens nach der Erzeugung des Gasstroms gegeben sein, sie kann jedoch bei dem Auftreffen auf Bauteile teilweise gestört werden. Bei der Ausrichtung des Gasstroms sollte darauf geachtet werden, dass möglichst wenige Stirnflächen von Teilen innerhalb des Strömungskegels angeordnet sind, sodass die Laminarität im weiteren Strömungsverlauf möglichst aufrecht erhalten bleibt. Vorzugsweise ist der Gasstrom während des Spanabhubs stationär, insbesondere vor dem Auftreffen auf den Span oder das Werkzeug. Das heißt, dass weder das Volumen pro Zeit noch die Strömungsgeschwindigkeit einer Änderung unterliegen. Eine gleichmäßige Zugkraft auf den Span ist so erreichbar.

Eine wichtige Ausgestaltung der Erfindung sieht vor, dass die Werkzeugschneide mit dem Gasstrom umströmt wird. Dies hat zwei wesentliche Vorteile. Zum Einen wird der Span unmittelbar an der Schneidzone vom Gasstrom ergriffen und unkontrollierte chaotische Bewegungen des Spans werden verhindert. Zum Anderen wird die Schneidzone durch den Gasstrom gekühlt. Beides führt zu einer sehr hohen Güte der bearbeiteten Oberfläche.

Sollte die Kühlleistung des Gaststroms bei bestimmten Bearbeitungen von Kunststoffen nicht ausreichen, kann der Gasstrom mit geringen Mengen Kältemittel und/oder Schmiermittel angereichert werden, sodass der Gasstrom letztlich ein Aerosolstrom ist. Minimale Nachteile durch ein höheres Volumengewicht des Gasstroms, können dann durch positive Auswirkungen der Schmierung und/oder Kühlung mehr als ausgeglichen werden.

Besonders bevorzugt besteht der Gasstrom allerdings aus Luft. Luft ist nahezu unbegrenzt verfügbar, greift Maschinenteile nicht an und Oxidationsreaktionen bei der drehenden Bearbeitung von Kunststoffen sind nicht die Regel. Die Verwendung von Luft ist deshalb die wohl preiswerteste Alternative. Wenn die Luft im Innenraum eines gekapselten Arbeitsraums umgewälzt wird, ist zudem eine hohe Luftfeuchtigkeit erzielbar, welche die Kühlleistung in der Schneidzone weiter verbessern kann.

Die Vorzüge der Erfindung kommen insbesondere dann zum Tragen, wenn der Span ein Fließspan ist. Dieser kann bei besonders zähen Materialien ein Monofließspan sein, welcher erst endet, wenn die Werkzeugschneide nicht mehr in das Werkstück eingreift. Gerade die besonders langen Späne werden mit dem erfindungsgemäßen Verfahren unter Kontrolle gebracht und ein Verwickeln mit drehenden Teilen verhindert.

Eine besondere Bedeutung kommt dabei der Fertigung von optischen Linsen aus Kunststoffen zu. Deshalb ist erfindungsgemäßes Verfahren besonders wertvoll, wenn das Kunststoffteil ein Rohling für eine Kunststofflinse ist, und eine Oberfläche des Rohlings zu einer Linsenoberfläche bearbeitet wird. Mit dem Verfahren sind gerade die hierbei sehr hohen Anforderungen an zu fertigende optische Oberflächen besonders gut erfüllbar. Gleichzeitig kann eine Vielzahl an Linsen automatisiert hergestellt werden, ohne dass es zu Unterbrechungen kommt. Massenprodukte wie Brillengläser sind so kostengünstig herstellbar. Auch Kameras, Ferngläser, Lupen und ähnliches verlangen zunehmend nach einer besonders leichten Bauweise. Mit dem Verfahren herstellbare, hochwertige optische Kunststofflinsen sind in diesen Produkten einsetzbar.

Vor allem hochzähe Kunststoffe können mit dem Verfahren sehr gut drehend bearbeitet werden. Eine wichtige Ausbildung des Verfahrens beschäftigt sich daher mit der Bearbeitung von aus Polykarbonat bestehenden Kunststoffteilen. Polykarbonat hat einen großen Marktanteil als Material für Brillengläser und verursachte im Stand der Technik bei der drehenden Bearbeitung große Probleme, insbesondere bei der Herstellung optischer Oberflächen. Der gleichmäßige Spanabtransport des erfindungsgemäßen Verfahrens löst diese Schwierigkeiten.

Um den Energieverbrauch des Verfahrens zu minimieren und Bauteile zu schonen, kann vorgesehen werden, dass der Flüssigkeitsstrom und/oder der Gasstrom deaktiviert werden, wenn die Werkzeugschneide nicht im Eingriff mit dem Kunststoffteil ist. Kurze Vorlauf- und Nachlaufzeiten können dabei berücksichtigt werden. Zum Beispiel sind der Gas- und Flüssigkeitsstrom bei einer automatisierten CNC-Maschine an bestimmte Positionen des Werkzeugs koppelbar.

Die Erfindung betrifft weiterhin eine Drehmaschinenvorrichtung zur Durchführung eines Verfahrens zur Bearbeitung eines Kunststoffteils mit einer Drehmaschinenvorrichtung, umfassend die folgenden Schritte:
- Rotieren des Kunststoffteils;
- In Eingriff bringen einer Werkzeugschneide mit dem Kunststoffteil;
- Erzeugen eines Gasstroms und eines Flüssigkeitsstroms;
- Umströmen eines von dem Kunststoffteil abgehobenen Spans mit dem Gasstrom und anschließendes Umströmen des Spans mit dem Flüssigkeitsstrom,
wobei die Drehmaschinenvorrichtung eine drehbare Werkstückaufnahme, ein Werkzeug mit einer Werkzeugschneide und eine Spanentfernungsvorrichtung aufweist, und wobei die Spanentfernungsvorrichtung einen Gasströmungserzeuger mit einer in Richtung des Werkzeugs ausgerichteten Gasdüse und einen Flüssigkeitsströmungserzeuger mit einem unterhalb der Werkzeugschneide angeordneten Flüssigkeitskanal aufweist.

Die Werkstückaufnahme der Drehmaschinenvorrichtung kann dazu geeignet sein, dass Kunststoffteil aufzunehmen. Werkstückaufnahme und Kunststoffteil können dann gemeinsam um eine Drehachse gedreht werden. Zudem hält die Drehmaschinenvorrichtung ein für das Verfahren notwendiges Werkzeug mit Werkzeugschneide bereit. Durch eine Zustellung des Werkzeugs kann die Werkzeugschneide mit dem sich drehenden Kunststoffteil in Eingriff gebracht werden. Dabei zeichnet sich erfindungsgemäße Drehmaschinenvorrichtung insbesondere durch die Spanentfernungsvorrichtung aus. Mit dem Gasströmungserzeuger kann ein Gasstrom erzeugt und durch die Gasdüse abgegeben werden. Dabei ist die Gasdüse in Richtung des Werkzeugs ausgerichtet, um einen abgehobenen Span schnell und direkt im Bereich der Schneidzone umströmen zu können. Weiterhin umfasst die Spanentfernungsvorrichtung einen Flüssigkeitsströmungserzeuger zur Erzeugung eines Flüssigkeitsstroms. Der Flüssigkeitskanal ist dabei unterhalb der Werkzeugschneide angeordnet, sodass sich ein Span schwerkraftbedingt in Richtung des Flüssigkeitskanals bewegen kann. Der Flüssigkeitskanal kann am Boden eines Arbeitsraums der Drehmaschinenvorrichtung, z.B. auch durch ein Maschinenbett selbst, ausgebildet sein. Dabei sollte er nach oben offen sein. Im Flüssigkeitskanal angekommen, kann der Spann ähnlich wie von einem Förderband kontinuierlich abtransportiert und mit einem konstanten Zug beaufschlagt werden.

Eine Ausgestaltung der Drehmaschinenvorrichtung sieht vor, dass der Flüssigkeitskanal in eine Spansammeleinrichtung mündet. Mit dieser können die Späne an einer zentralen Stelle gesammelt und anschließend einfach entsorgt werden. Zudem kann die Flüssigkeit des Flüssigkeitsstroms gesammelt werden und ist von hier aus wieder verwendbar. Insbesondere wenn die Spansammeleinrichtung einen Spanabscheider aufweist, kann die Flüssigkeit im Kreis gefördert werden. Die Spansammeleinrichtung kann dann gleichzeitig als Flüssigkeitspuffer dienen, um etwaige Verluste, zum Beispiel ausgelöst durch Verdunstung, auszugleichen. Hierfür kann die Spansammeleinrichtung oder deren Spanabscheider mit einer Eingangsseite des Flüssigkeitsströmungserzeugers hydraulisch verbunden sein, der ausgangsseitig mit einer Eingangsseite des Flüssigkeitskanals verbindbar ist. Die Ausgangsseite des Flüssigkeitskanals mündet dann wiederum in der Spansammeleinrichtung.

Besonders bevorzugt weist der Flüssigkeitskanal von einer Eingangsseite zu einer Ausgangsseite ein Gefälle auf. Auf diese Weise kann die Flüssigkeitsströmung in die gewünschte Richtung gelenkt, sowie die Strömungsgeschwindigkeit des Flüssigkeitsstroms an die Entstehungsgeschwindigkeit des Spans angepasst werden. Insbesondere sollte die Strömungsgeschwindigkeit größer sein als letztere, um den Span zu umspülen und mit einer Zugkraft zu beaufschlagen. Außerdem führt ein gleichmäßiges Gefälle zu einer gleichmäßigen laminaren und/oder stationären Strömung, sodass auch die Zugkraft sehr gleichmäßig ist. Entsprechend entstehen keine Defekte auf der bearbeiteten Oberfläche durch plötzliche Zugkraftänderungen auf den Span. Durch das Gefälle kann der Flüssigkeitskanal auch problemlos nach oben geöffnet ausgebildet sein. Idealerweise verläuft das Gefälle im rechten Winkel zur Drehachse der Drehmaschinenvorrichtung und somit des Kunststoffteils.

Alternativ könnte das Gefälle auch von den drehenden Teilen weg ausgerichtet sein. Das würde bedeuten, dass das Gefälle relativ zu einer Ebene senkrecht zur Drehachse auf der Seite der Werkstückaufnahme höher gelegen ist, als auf der zur Werkzeugschneide zeigenden Seite. Somit würde ein Span vom Flüssigkeitsstrom weg von den drehenden Teilen gezogen.

Die Gasdüse sollte auf der zur Werkstückaufnahme zeigenden Seite der Werkzeugschneide angeordnet sein. Somit kann sie den Span von den drehenden Teilen wegblasen. Beachtet werden sollte jedoch, dass die Werkstückaufnahme und/oder das Kunststoffteil nicht zwischen der Gasdüse und der Werkzeugschneide liegen, da ansonsten die Werkzeugschneide nicht umströmt werden kann. Die Gasdüse kann deswegen auch in einem 90° Winkel zur Drehachse ausgerichtet sein oder sogar etwas mehr in Richtung von der Werkstückaufnahme weg. Hierdurch kann die Werkzeugschneide auch bei konkav geformten Bearbeitungsflächen umströmt werden. Die Bearbeitungsfläche kann dabei den Gasstrom umlenken, sodass der erfasste Span ebenfalls von den drehenden Teilen weggeführt wird.

Um den Span nach unten wegblasen zu können, sollte die Gasdüse höher als die Werkzeugschneide angeordnet sein. Dies ist besonders günstig, da der Span ohnehin schwerkraftbedingt nach unten strebt. Durch die Anordnung der Gasdüse oberhalb der Werkzeugschneide, kann diese Bewegung unterstützt werden. Insbesondere wird hierdurch auch ein Aufsteigen und Kippen über einen toten Punkt des Spans verhindert, was ansonsten zu unkontrollierten Richtungsänderungen des Spans führen kann. Stattdessen kann der Span erfindungsgemäß gleichmäßig umströmt werden und ein Verlassen des Strömungskegels ist vermeidbar. Entsprechend wird der Span mit einer kontinuierlichen Zugkraft von der Schneidzone weggeführt.

Die Gasdüse könnte weiterhin mechanisch mit dem Werkzeug verbunden sein. Folglich würde die Düse mit den Bewegungen des Werkzeugs gekoppelt. Der Gasstrom kann so das Werkzeug besonders gut nachkühlen, während zum Beispiel ein neues Kunststoffteil eingelegt wird. Auch könnte die Gasdüse verstellbar ausgebildet sein. Eine Positionsverstellung ist beispielsweise mit einem Flexschlauch realisierbar. Eine weitere Verstellmöglichkeit könnte ein veränderbar ausgebildeter Durchlassquerschnitt der Gasdüse sein. Mittels der verschiedenen Verstellmöglichkeiten könnte das Verfahren schnell an unterschiedliche Fertigungsbedingungen angepasst werden. Zum Beispiel an unterschiedliche zu fertigende Oberflächen, unterschiedliche Kunststoffe mit unterschiedlichem Spanabhubverhalten und unterschiedliche Werkzeugschneiden. Ergänzt werden könnte die Vorrichtung durch wenigstens eine weitere Gasdüse. Mit dieser könnte der Gasstrom Teilbereiche aufweisen, sodass der Span erst im Strömungskegel eines ersten Teilbereichs und anschließend im Strömungskegel eines zweiten Teilbereichs umströmt wird. Die Teilbereiche können dabei linear hintereinander liegen, oder aber die Gasdüsen sind in einem Winkel angeordnet, sodass der Gasstrom eine Richtungsänderung erfährt. So könnte der erste Teilbereich die Werkzeugschneide umfassen, und der zweite Teilbereich von den drehenden Teilen weggerichtet sein. Somit wird der Span aus der Schneidzone zunächst abgeführt und letztere gekühlt. Im zweiten Teilbereich angekommen, könnte der Span dann weg von den drehenden Teilen geführt werden.

Weitere Merkmale, Einzelheiten und Vorteile der Erfindung ergeben sich aus dem Wortlaut der Ansprüche sowie aus der folgenden Beschreibung eines Ausführungsbeispiels anhand der Zeichnung. Dabei zeigt:

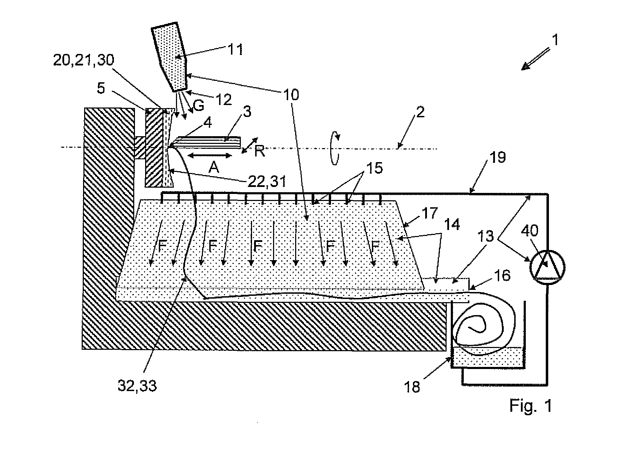

Fig. 1 eine Drehmaschinenvorrichtung zur Durchführung des Verfahrens.

Fig. 1 zeigt eine Drehmaschinenvorrichtung 1 mit einer drehbaren Werkstückaufnahme 5, einem Werkzeug 3 mit einer Werkzeugschneide 4 und einer Spanentfernungsvorrichtung 10. Letztere weist einen Gasströmungserzeuger 11 mit einer in Richtung des Werkzeugs 3 ausgerichteten Gasdüse 12 und einen Flüssigkeitsströmungserzeuger 13 mit einem unterhalb der Werkzeugschneide 4 angeordneten Flüssigkeitskanal 14 auf.

Der Flüssigkeitskanal 14 mündet in eine Spansammeleinrichtung 18. Weiterhin hat er ein von einer Eingangsseite 15 zu einer Ausgangsseite 16 ausgerichtetes Gefälle 17 in Form einer Rampe. Die Rampe ist dabei in einem 90° Winkel zu einer Drehachse 2 der Drehmaschinenvorrichtung 1 ausgerichtet. Zur Speisung des Flüssigkeitskanals 14 mit Flüssigkeit F umfasst der Flüssigkeitsströmungserzeuger 13 eine in einer Flüssigkeitsleitung 19 angeordnete Pumpe 40. Diese Flüssigkeitsleitung 19 ist eingangsseitig mit der Spansammeleinrichtung 18 verbunden und mündet ausgangsseitig durch zahlreiche Öffnungen in die Eingangsseite 15 des Flüssigkeitskanals 14. Von hieraus strömt die Flüssigkeit F gleichmäßig bzw. laminar die Rampe hinab und schließlich über einen quer zur Rampe ausgerichteten Sammelkanal zu einer Ausgangsseite 16 des Flüssigkeitskanals 14.

Die Gasdüse 12 ist minimal auf der zur Werkstückaufnahme 5 zeigenden Seite der Werkzeugschneide 4 angeordnet. Aus dieser Position kann ein erzeugter Strömungskegel eines Gasstroms G gerade noch die Werkzeugschneide 4 umströmen. Er führt den Span 32 unmittelbar hinter der Schneidzone der Werkzeugschneide 4 von der Werkstückaufnahme 5 weg. Zusätzlich ist die Gasdüse 12 höher als die Werkzeugschneide 4 angeordnet. Dabei ist sie nach unten ausgerichtet. Ein erzeugter Gasstrom G umströmt so die Werkzeugschneide 4 und trifft schließlich auf den Flüssigkeitsstrom F im Flüssigkeitskanal 14.

Von der Werkstückaufnahme 5 wird ein Kunststoffteil 30 gehalten. Insbesondere ist letzteres ein Rohling 20, dessen stirnseitige Oberfläche 31 mit der Werkzeugschneide 4 bearbeitet wird. Durch eine axiale Zustellbewegung A parallel zur Drehachse 2 kann die Werkzeugschneide 4 hierfür mit dem Rohling 20 in Eingriff gebracht und ein Span 32 abgehoben werden. Hierbei wird der Abstand der Werkzeugschneide 4 zur Drehachse 2 durch eine radiale Zustellbewegung R verändert. Auf diese Weise entsteht eine Linsenoberfläche 22 einer optischen Kunststofflinse 21.

Zusätzlich ist vorgesehen, dass der Rohling 20 von unten nach oben an der Werkzeugschneide 4 vorbeigeführt wird. Die Werkzeugschneide 4 ist hierfür auf der Seite des Rohlings 20 mit diesem in Eingriff, auf welcher der Rohling 20 eine rotationsbedingte Aufwärtsbewegung durchführt. Der entstehende Span 32 hat so unmittelbar nach der Schneidzone bereits eine arithmetisch gemittelte Bewegungsausrichtung nach unten. Unterstützt durch den Gasstrom G wird ein Aufsteigen und über einen toten Punkt Kippen des Spans 32 verhindert, insbesondere wenn dieser ein Fließspan 33 ist. Stattdessen wird der Span 32 gleich nach unten aus dem Bereich der sich drehenden Teile heraus geführt. Die Wahrscheinlichkeit, dass der Span 32 in drehende Teile gerät und sich um diese wickelt, wird so minimiert.

Mit der gezeigten Drehmaschinenvorrichtung 1 ist nunmehr ein Verfahren durchführbar, das folgende Schritte umfasst:
- Rotieren des Kunststoffteils 30;
- In Eingriff bringen der Werkzeugschneide 4 mit dem Kunststoffteil 30;
- Erzeugen eines Gasstroms G und eines Flüssigkeitsstroms F;
- Umströmen des von dem Kunststoffteil 30 abgehobenen Spans 32 mit dem Gasstrom G und anschließendes Umströmen des Spans 32 mit dem Flüssigkeitsstrom F.

Insbesondere wird der Span 32 mittels des Gasstroms G in die Richtung des Flüssigkeitsstroms F geblasen, wobei der Span 32 zwischen dem Gasstrom G und dem Flüssigkeitsstrom F keinen nicht durchströmten Raum durchquert. Somit wird der Span 32 vom Gasstrom G unmittelbar in den Flüssigkeitsstrom F geblasen. Hierfür wird der Flüssigkeitsstroms F unter der Werkzeugschneide 4 hindurch geleitet. Das Gefälle 17 der hierfür ausgebildeten Rampe ist derart gestaltet, dass der Flüssigkeitsstrom F gleichmäßig ist.

Zusätzlich ist der erzeugte Gasstrom G laminar, besteht aus Luft und umströmt die Werkzeugschneide 4. Wie zu erkennen ist, entsteht bei dem Drehprozess ein Fließspan 33. Dieser reicht von der Schneidzone der Werkzeugschneide 4 bis in den Spansammelbehälter 18. Auf diese Weise ist ein Materialabhub mit einem Monofließspan durchführbar, bei dem eine Linsenoberfläche 22 ohne Defekte herstellbar ist. Die Linsenoberfläche 22 ist anschließend problemlos polierbar. Dies ist besonders vorteilhaft bei einer Bearbeitung von Kunststoffteilen 30 aus Polykarbonat.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Drehmaschinenvorrichtung
- 2: Drehachse
- 3: Werkzeug
- 4: Werkzeugschneide
- 5: Werkstückaufnahme

- 10: Spanentfiernungsvorrichtung
- 11: Gasströmungserzeuger
- 12: Gasdüse
- 13: Flüssigkeitsströmungserzeuger
- 14: Flüssigkeitskanal
- 15: Eingangsseite
- 18: Ausgangsseite
- 17: Gefälle
- 18: Spansammeleinrichtung
- 19: Flüssigkeitsleitung

- 20: Rohling
- 21: Kunststofflinse
- 22: Linsenoberfläche

- 30: Kunststoffteil
- 31: Oberfläche
- 32: Span
- 33: Fließspan

- 40: Pumpe

- A: axiale Zustellbewegung
- F: Flüssigkeitsstrom
- G: Gasstrom
- R: radiale Zustellbewegung

## Patentansprüche

1. Verfahren zur Bearbeitung eines Kunststoffteils (30) mit einer Drehmaschinenvorrichtung (1), umfassend die folgenden Schritte:
a) Rotieren des Kunststoffteils (30);
b) In Eingriff bringen einer Werkzeugschneide (4) mit dem Kunststoffteil (30);
und **gekennzeichnet durch** die folgenden Schritte:
c) Erzeugen eines Gasstroms (G) und eines Flüssigkeitsstroms (F);
d) Umströmen eines von dem Kunststoffteil (30) abgehobenen Spans (32) mit dem Gasstrom (G) und anschließendes Umströmen des Spans (32) mit dem Flüssigkeitsstrom (F).

2. Verfahren nach Anspruch 1, **gekennzeichnet durch** folgenden Schritt:
e) Blasen des Spans (32) in die Richtung des Flüssigkeitsstroms (F) mittels des Gasstroms (G).

3. Verfahren nach einem der Ansprüche 1 oder 2, **gekennzeichnet durch** folgenden Schritt:
f) Blasen des Spans (32) in den Flüssigkeitsstrom (F) mittels des Gasstroms (G).

4. Verfahren nach einem der vorhergehenden Ansprüche, **gekennzeichnet durch** folgenden Schritt:
g) Durchleiten des Flüssigkeitsstroms (F) unter der Werkzeugschneide (4).

5. Verfahren nach einem der vorhergehenden Ansprüche, **dadurch gekennzeichnet, dass** der Flüssigkeitsstrom (F) gleichmäßig ist.

6. Verfahren nach einem der vorhergehenden Ansprüche, **dadurch gekennzeichnet, dass** der erzeugte Gasstrom (G) laminar ist.

7. Verfahren nach einem der vorhergehenden Ansprüche, **gekennzeichnet durch** folgenden Schritt:
h) Umströmen der Werkzeugschneide (4) mit dem Gasstrom (G).

8. Verfahren nach einem der vorhergehenden Ansprüche, **dadurch gekennzeichnet, dass** der Gasstrom (G) aus Luft besteht.

9. Verfahren nach einem der vorhergehenden Ansprüche, **dadurch gekennzeichnet, dass** der Span (32) ein Fließspan (33) ist.

10. Verfahren nach einem der vorhergehenden Ansprüche, **dadurch gekennzeichnet, dass** das Kunststoffteil (30) ein Rohling (20) für eine Kunststofflinse (21) ist, und umfassend den folgenden Schritt:
i) Bearbeiten einer Oberfläche (31) des Rohlings (20) zu einer Linsenoberfläche (22).

11. Verfahren nach einem der vorhergehenden Ansprüche, **dadurch gekennzeichnet, dass** das Kunststoffteil (30) aus Polykarbonat besteht.

12. Drehmaschinenvorrichtung (1) zur Durchführung eines Verfahrens nach einem der Ansprüche 1 bis 11, mit einer drehbaren Werkstückaufnahme (5), einem Werkzeug (3) mit einer Werkzeugschneide (4) und einer Spanentfernungsvorrichtung (10), **dadurch gekennzeichnet, dass** die Spanentfernungsvorrichtung (10) einen Gasströmungserzeuger (11) mit einer in Richtung des Werkzeugs (3) ausgerichteten Gasdüse (12) und einen Flüssigkeitsströmungserzeuger (13) mit einem unterhalb der Werkzeugschneide (4) angeordneten Flüssigkeitskanal (14) aufweist.

13. Drehmaschinenvorrichtung (1) nach Anspruch 12, **dadurch gekennzeichnet, dass** der Flüssigkeitskanal (14) in eine Spansammeleinrichtung (18) mündet.

14. Drehmaschinenvorrichtung (1) nach einem der Ansprüche 12 oder 13, **dadurch gekennzeichnet, dass** der Flüssigkeitskanal (14) von einer Eingangsseite (15) zu einer Ausgangsseite (16) ein Gefälle (17) aufweist.

15. Drehmaschinenvorrichtung (1) nach einem der Ansprüche 12 bis 14, **dadurch gekennzeichnet, dass** die Gasdüse (12) auf der zur Werkstückaufnahme (5) zeigenden Seite der Werkzeugschneide (4) angeordnet ist.

16. Drehmaschinenvorrichtung (1) nach einem der Ansprüche 12 bis 15, **dadurch gekennzeichnet, dass** die Gasdüse (12) höher als die Werkzeugschneide (4) angeordnet ist.
